# EUROPÄISCHE PATENTSCHRIFT

(11) **EP 0 791 599 B1**
(45) Veröffentlichungstag und Bekanntmachung des Hinweises auf die Patenterteilung: **23.10.2002**
(21) Anmeldenummer: 97200237.2
(22) Anmeldetag: 29.01.1997
(51) Int. Cl.: C07F 7/22, C03C 17/25

(54) **Verfahren zur Stabilisierung von Organozinnhalogeniden mittels Lactamen und/oder Lactonen sowie Metall- und/oder Halbmetallalkoholaten sowie Glasbeschichtungsformulierung auf Glas- oder Keramikoberflächen**
Process for stabilizing organotin compounds with lactames and/or lactones, and metalalcoholates, and compositions for the coating of glass and ceramics
Procédé pour la stabilisation des halogénures de composés organoétain avec des lactames et/ou des lactones, et des alcoolates de métaux, et compositions pour le revêtement de verres et céramiques

(30) Priorität: 22.02.1996 DE 19606591
(43) Veröffentlichungstag der Anmeldung: 27.08.1997
(73) Patentinhaber: Crompton GmbH, 59192 Bergkamen (DE)
(72) Erfinder: Schumacher, Oliver, Dr., 59368 Werne (DE); Stewen, Ulrich, Dr., 58239 Schwerte (DE)

(56) Entgegenhaltungen:
- EP-A- 0 132 024

## Beschreibung

Flüssige Älkylzinnverbindungen, insbesondere MBTCl (Mono-n-butylzinntrichlorid), werden als Vergütungsmittel für Glasoder sonstige keramische Oberflächen eingesetzt.

Zum Aufbringen der optisch nicht wahrnehmbaren Vergütungsschicht werden die noch heißen Glasflächen nach dem Verlassen der Produktionsmaschine bei 400 - 600 °C mit einer flüchtigen Organozinnverbindung bedampft oder besprüht. Bei diesen hohen Temperaturen und unter dem Einfluß des atmosphärischen Sauerstoffs werden die zinnorganischen Substanzen auf der Glasoberfläche pyrolysiert und hinterlassen eine gleichmäßige Zinnoxid-Schicht.

Diese Schutzschicht überbrückt die während der Abkühlphase zwangsläufig auftretenden Mikrorisse, erhöht die Härte des Glases und bildet die notwendige Haftschicht für die Auftragung eines Gleitmittels. Erst durch diese Vergütungstechnik sind z. B. in Brauereien Abfülleistungen von mehr als 100.000 Flaschen pro Stunde möglich. Vom wirtschaftlichen wie auch ökologischen Standpunkt aus ist wichtig, daß durch dieses Verfahren sowohl die Gebrauchsdauer von Mehrwegflaschen erhöht als auch das Flaschengewicht reduziert werden konnte.

Die Verwendung von Monoalkylzinnhalogeniden wurde detailliert bereits in US-PS 4 144 362 beschrieben. Es hat sich gezeigt, daß MBTCl das optimale Vergütungsmittel ist. Gegenüber anorganischen Metallhalogeniden (z. B. SnCl₄, TiCl₄) hat MBTCl den Vorteil einer geringeren Hydrolyseanfälligkeit und höheren pyrolytischen Ausbeute.

Technisch wird MBTCl durch Komproportionierung, ausgehend von Tetra-n-butylzinn und SnCl₄, mit anschließender fraktionierter Destillation des entstehenden Produktgemisches aus Mono-n-butylzinntrichlorid und Di-n-butylzinndichlorid hergestellt. Obwohl MBTCl durch eine technisch aufwendige Rektifikation in hoher Reinheit gewonnen werden kann, kommt es bei der Verwendung als Glasvergütungsmittel gelegentlich zu Störungen während der Applikation.

Ursache hierfür ist die Bildung von Feststoffen in MBTCl-Vorratsbehältern, Leitungs- und Applikationssystemen, die zu nicht kontrollierbaren Schwankungen der Applikationsmenge oder sogar zur Verstopfung des sensiblen Förder- und Applikationssystems führt. In solch einem Fall muß die gesamte Flaschenproduktion gestoppt werden, mit entsprechenden gravierenden wirtschaftlichen Konsequenzen.

Die Bildung dieser Feststoffe ist auf Verunreinigungen zurückzuführen, die aufgrund des Produktionsprozesses in Spuren im Produkt verbleiben und bei Zutritt von z. B. Luftfeuchtigkeit in MBTCl unlösliche Hydrate oder Hydrolyseprodukte bilden.

In EP-A-0 132 024 wird vorgeschlagen, dem MBTCl Additive zuzusetzen, um das Risiko einer Feststoffabscheidung zu verringern. Die Additive sollen die Bildung von störenden Mengen dieser Feststoffe, wie beispielsweise von kristallinem SnCl₄ x 5 H₂O, verhindern, indem sie diese Verbindung auflösen.

Gemäß dem dortigen Vorschlag werden bis zu 10 Gew.-% Additive zugesetzt. Als Additive werden Verbindungen aus folgenden Substanzklassen genannt: bestimmte Alkohole, Glykole, Glykolether, Ester, Ketone, Ether, Aldehyde, Anhydride, Formamide, Acetate und Nitrile.

Bei der Kumulation widriger Umstände, wie beispielsweise höheren Anteilen produktionsbedingter Verunreinigungen im Produkt selbst und gegebenenfalls zusätzlich in den Behältern, Leitungen und Applikationssystemen, ist die Kapazität dieser Additive aber schnell erreicht und/oder überschritten.

Geringfügige weitere, zum Teil nicht vorhersehbare oder nicht zu beeinflussende Faktoren führten daher immer wieder zu Beeinträchtigungen des Produktionsprozesses oder der Qualität der Beschichtungen. Der Einsatz größerer Mengen dieser Additive ist nur bedingt möglich, da Flammpunkt, Viskosität und/oder Korrosivität technisch nachteilig beeinflußt werden.

Für flüssige Alkylzinnverbindungen, welche als Vergütungsmittel für Glas- oder Keramikoberflächen eingesetzt werden, bestand daher weiterhin ein Bedarf an Additiven, welche die Bildung von unerwünschten Feststoffen effizienter verhindern können.

Aufgabe der vorliegenden Erfindung war es daher, in flüssigen Alkylzinnverbindungen, insbesondere Mono-n-butylzinntri-chlorid (MBTCl), lösliche Verbindungen bereitzustellen, welche die Bildung von unerwünschten Feststoffen wirkungsvoller verhindern können, als die gemäß bekanntem Stand der Technik verwendeten Additive.

Überraschenderweise wurde nun gefunden, daß in Alkylzinnverbindungen lösliche, hydrolisierbare Additive wie z. B. Carbonsäurechloride, bestimmte Metall- bzw. Halbmetallalkoholate, Lactame oder Lactone Stabilisatoren darstellen, die Alkylzinnverbindungen gegenüber den im Stand der Technik genannten Verbindungen in deutlich verringerten Einsatzkonzentrationen bzw. mit entsprechend höherer Kapazität effektiv stabilisieren können.

Ein Gegenstand der Erfindung ist daher ein Verfahren zur Stabilisierung von bei Raumtemperatur flüssigen Alkylzinnverbindungen, insbesondere Alkylzinntrihalogeniden, welches dadurch gekennzeichnet ist, daß zur Stabilisierung 0,1 Gew.-% bis 10 Gew.-%, vorzugsweise 0,3 bis 3 Gew.-%, in den Alkylzinnverbindungen lösliche und mit Wasser reaktive Verbindungen mitverwendet werden.

Ein weiterer Gegenstand der Erfindung sind Glasbeschichtungsformulierungen, enthaltend bei Raumtemperatur flüssige Alkylzinnverbindungen und 0,1 Gew.-% bis 10 Gew.-%, vorzugsweise 0,3 bis 3 Gew.-%, eines in den Alkylzinnverbindungen löslichen und mit Wasser reaktiven Additives.

Weitere Gegenstände der Erfindung sind durch die Ansprüche gekennzeichnet.

Die erfindungsgemäß mitverwendeten Alkylzinnverbindungen sind flüssige Verbindungen der allgemeinen Formel (I)

(R)ₙSnX₄₋ₙ (I)

in welcher bedeuten: R = Alkylreste mit 1 - 8 C-Atomen, vorzugsweise 1 - 4 C-Atomen; X = Cl, Br, J; n = 1 - 4, insbesondere 1, wie beispielsweise Dimethylzinndichlorid, Mono-n-octylzinntrichlorid und insbesondere Mono-n-butyl-zinntrichlorid.

Während die Additive gemäß Stand der Technik reine "Lösungsmittel" sind, deren Funktion sich darauf beschränkt, die mit Feuchtigkeit gebildeten unlöslichen Hydrate oder Hydrolyseprodukte in Lösung zu halten oder wiederaufzulösen, beruht die Effektivität der erfindungsgemäß mitverwendeten Additive in erster Linie darauf, bereits die Bildung dieser Hydrate oder Hydrolyseprodukte zu verhindern: Im System (Vorratsbehälter, Leitungen) vorhandene oder eindringende Feuchtigkeit wird chemisch gebunden und somit dauerhaft aus dem System entfernt.

Die erfindungsgemäß mitverwendbaren Additive dieser Klasse sind demzufolge alle mit Wasser reaktiven Verbindungen, welche unter den gegebenen Praxisbedingungen sowohl als nicht hydrolisierte Edukte als auch nach der Reaktion mit Wasser als Hydrolysate in den Alkylzinnverbindungen löslich sind.

Durch Mitverwendung dieser Verbindungen wird die unerwünschte Feststoffabscheidung mit gegenüber dem Stand der Technik deutlich reduzierten Zusatzmengen effektiv verhindert.

Verbindungen dieser Klasse sind Säurechloride der allgemeinen Formel (II)

R¹-(-COHal)ₘ (II)

worin R¹ ein m-wertiger, gegebenenfalls Doppelbindungen enthaltender, verzweigter, aliphatischer, cycloaliphatischer oder aromatischer Rest mit 1 - 10 C-Atomen, Hal ein Halogenatom, insbesondere Cl, ist und m = 1 oder 2 ist, wie beispielsweise Acetylchlorid, Propionylchlorid, Cyclohexanoylchlorid, Methacryloylchlorid, Benzoylchlorid, Adipinsäuredichlorid.

Weitere Verbindungen dieser Klasse sind Lactame oder Lactone der allgemeinen Formel (III) 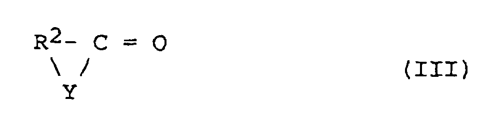 worin R² ein 2-wertiger, gegebenenfalls verzweigter, aliphatischer Rest mit 3 - 8 C-Atomen ist, Y = -O- oder -NR³ ist mit R³ = vorzugsweise H oder ein Alkylrest mit 1 - 4 C-Atomen, wie beispielsweise 2-Pyrrolidon, N-Methyl-2-Pyrrolidon, 2-Piperidinon, ε-Caprolactam, γ-Butyrolacton, γ-Valerolacton, ε-Caprolacton.

Weitere Verbindungen dieser Klasse sind Metall- bzw. Halbmetallalkoholate der allgemeinen Formel (IV)

ER⁴ ₐ(OR⁵)_{b}(OR⁶)_{c} (IV)

worin E = Si oder Ti ist, a = 0 - 3, b = 1 - 4, c = 0 - 4 und a+b+c = 4 und R⁴ ein gegebenenfalls verzweigter, gegebenenfalls Mehrfachbindungen enthaltender aliphatischer Rest mit 1 - 8 C-Atomen sein kann und R⁵, R⁶ gleich oder verschiedene, gegebenenfalls verzweigte Alkylreste mit 1 - 8 C-Atomen oder -C(CH₃)=CH-C(O)-CH₃ (Rest des Acetylacetonats) sein können, wie beispielsweise Tetraethyltitanat, Tetra-n-propyltitanat, Tetra-i-propyltitanat, Tetra-nbutyltitanat, Di-isopropoxy-titan-bis(acetylacetonat), Methyltrimethoxysilan, Ethyltriethoxysilan, Vinyltriethoxysilan, i-Propyltriethoxysilan, i-Butyltrimethoxysilan, Octyltriethoxysilan, Trimethylethoxysilan.

Die Verbindungen der verschiedenen Klassen können sowohl allein als auch als Mischungen miteinander und/oder untereinander eingesetzt werden.

Praxisgerechte Zusatzmengen der erfindungsgemäß mitverwendeten Additive haben keine negativen Auswirkungen auf die Güte der Glasbeschichtung. So werden Titanate in speziellen Anwendungen zur Glasvergütung (TiO₂-Beschichtungen zur Glashärtung) bereits eingesetzt. Das durch Pyrolyse aus Alkoxysilanen entstehende SiO₂ ist ohnehin Hauptbestandteil des Glases und durch Migration in jeder SnO₂-Beschichtung vorhanden. Die mitverwendeten Carbonsäurechloride, Lactame, Lactone sowie die entsprechenden Hydrolyseprodukte werden wie die Alkylzinnhalogenide selbst zu CO₂, HCl und H₂O pyrolysiert. Die Verwendung von Säurechloriden hat zudem den Vorteil, daß durch die Freisetzung equimolarer Mengen HCl die Bildung von MBTCl-Hydrolysaten weiter zurückgedrängt wird.

Flammpunkt und Korrosivität und Viskosität des Glasvergütungsmittels MBTCl werden durch die erfindungsgemäßen Additive nicht beeinträchtigt.

### Beispiele

### Beispiel 1

Dieses Beispiel zeigt das Vermögen der erfindungsgemäßen Substanzen, das Auftreten der typischen Feststoffe in MBTCl zu verhindern oder herauszuzögern.

In trockener N₂-Atmosphäre wurden 100 g MBTCl und 0,5 g des jeweiligen Stabilisators in einen 100 ml Erlenmeyerkolben mit Schliff gegeben und 5 min geschüttelt.

Danach wurden dieser Mischung 0,4 g SnCl₄ und 0,1 ml vollentsalztes Wasser zugesetzt und erneut 5 min geschüttelt. Nach 18 h wurde das Resultat visuell beurteilt.

Bewertung:
- "1" =: klare, homogene, feststofffreie Flüssigkeit
- "2" =: leichte bis mittlere Feststoffbildung
- "3" =: starke Feststoffbildung

| Stabilisator | | Beurteilung |
|---|---|---|
| Acetylchlorid | | 1 |
| Propionylchlorid | | 1 |
| Cyclohexanoylchlorid | | 1 |
| Methacryloylchlorid | | 1 |
| Benzoylchlorid | | 1 |
| | | |
| i-Propyltriethoxysilan | | 1 |
| i-Butyltrimethoxysilan | | 1 |
| | | |
| Tetraethyltitanat | | 1 |
| Tetrabutyltitanat | | 1 |
| Diisopropoxytitanbis(acetylacetonat) | | 1 |
| Caprolactam | | 1 |
| Caprolacton | | 1 - 2 |
| | | |
| n-Propanol-1 | (Vergleichsbeispiel) | 2 |
| n-Butanol-1 | (Vergleichsbeispiel) | 2 |
| Propylenglycol | (Vergleichsbeispiel) | 2 |
| n-Butylacetat | (Vergleichsbeispiel) | 3 |
| Methyl-iso-butylketon | (Vergleichsbeispiel) | 3 |
| Acetaldehyd | (Vergleichsbeispiel) | 3 |
| | | |
| ohne Stabilisator | | 3 |

### Beispiel 2

Dieses Beispiel zeigt das Vermögen der erfindungsgemäßen Substanzen, typische Feststoffe in MBTCl gänzlich oder teilweise wieder aufzulösen.

Die Testmethode war eine Modifikation der in EP-A 0 132 024 beschriebenen Vorgehensweise.

100 g MBTCl, 0,4 g SnCl₄ und 0,1 ml vollentsalztes Wasser wurden in einen 100 ml Erlenmeyerkolben mit Schliff gegeben und 5 min geschüttelt. Es bildete sich ein kristalliner Niederschlag.

Nach 18 h wurden dieser Mischung 0,5 g des jeweiligen Stabilisators zugesetzt und erneut 5 min geschüttelt.

Nach weiteren 18 h wurde das Resultat visuell beurteilt. Die Bewertung erfolgte wie unter Beispiel 1 beschrieben.

| | | |
|---|---|---|
| Stabilisator | | Beurteilung |
| Acetylchlorid | | 1 |
| Propionylchlorid | | 1 |
| Cyclohexanoylchlorid | | 1 |
| Methacryloylchlorid | | 1 |
| | | |
| n-Propanol-1 | (Vergleichsbeispiel) | 2 |
| n-Butanol-1 | (Vergleichsbeispiel) | 2 |
| Propylenglycol | (Vergleichsbeispiel) | 2 |
| n-Butylacetat | (Vergleichsbeispiel) | 3 |
| Methyl-iso-butylketon | (Vergleichsbeispiel) | 3 |
| Acetaldehyd | (Vergleichsbeispiel) | 3 |
| | | |
| ohne Stabilisator | | 3 |

## Patentansprüche

1. Verfahren zur Stabilisierung von bei Raumtemperatur flüssigen Alkylzinnverbindungen, insbesondere Alkylzinntrihalogeniden, **dadurch gekennzeichnet, daß** zur Stabilisierung 0,1 Gew.-% bis 10 Gew.-% in den Alkylzinnverbindungen lösliche und mit Wasser reaktive Verbindungen mitverwendet werden.

2. Verfahren gemäß Anspruch 1, **dadurch gekennzeichnet, daß** als Alkylzinnverbindungen Mono-n-butyl-zinntrichlorid verwendet wird.

3. Verfahren gemäß den Ansprüchen 1 und 2, **dadurch gekennzeichnet, daß** als Additive ein oder mehrere Säurehalogenide der allgemeinen Formel (II)
R¹-(-COHal)ₘ (II)
worin R¹ = m-wertiger, gegebenenfalls Doppelbindungen enthaltender, verzweigter, aliphatischer, cycloaliphatischer oder aromatischer Rest mit 1 - 10 C-Atomen, Hal ein Halogenatom und m = 1 oder 2 ist, verwendet werden.

4. Verfahren gemäß den Ansprüchen 1 und 2, **dadurch gekennzeichnet, daß** als Additive Lactame und/oder Lactone der allgemeinen Formel (III) 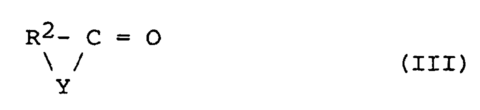 worin R² ein 2-wertiger, gegebenenfalls verzweigter, aliphatischer Rest mit 3 - 8 C-Atomen ist, Y = -O- oder -NR³ ist mit R³ = H oder ein Alkylrest mit 1 - 4 C-Atomen, verwendet werden.

5. Verfahren gemäß den Ansprüchen 1 und 2, **dadurch gekennzeichnet, daß** als Additive Metall- und/oder Halbmetallalkoholate der allgemeinen Formel (IV)
ER⁴ ₐ(OR⁵)_{b}(OR⁶)_{c} (IV)
worin E = Si oder Ti ist, a = 0 - 3, b = 1 - 4, c = 0 - 4 und a+b+c = 4 und R⁴ ein gegebenenfalls verzweigter, gegebenenfalls Mehrfachbindungen enthaltender aliphatischer Rest mit 1 - 8 C-Atomen sein kann und R⁵, R⁶ gleich oder verschiedene, gegebenenfalls verzweigte Alkylreste mit 1 - 8 C-Atomen oder -C(CH₃)=CH-C(O)-CH₃ (Rest des Acetylacetonats) sein können, verwendet werden.

6. Verfahren gemäß den Ansprüchen 1 - 5, **dadurch gekennzeichnet, daß** mindestens zwei Additive aus der Gruppe der Säurehalogenide der allgemeinen Formel (II) und/oder Lactame und/oder Lactone der allgemeinen Formel (III) und/oder der Metall- und/oder Halbmetallalkoholate der allgemeinen Formel (IV) mitverwendet werden.

7. Glasbeschichtungsformulierung, enthaltend bei Raumtemperatur flüssige Alkylzinnverbindungen und gelöste Additive, **dadurch gekennzeichnet, daß** als Additive 0,1 - 10 Gew.-% mit Wasser reaktive Verbindungen mitverwendet werden.

8. Glasbeschichtungsformulierung gemäß Anspruch 7, **dadurch gekennzeichnet, daß** als Alkylzinnverbindung Mono-n-butyl-zinntrichlorid mitverwendet wird.

9. Glasbeschichtungsformulierung gemäß Anspruch 7, **dadurch gekennzeichnet, daß** ein oder mehrere Additive aus der Gruppe der Säurehalogenide der allgemeinen Formel (II) und/oder Lactame und/oder Lactone der allgemeinen Formel (III) und/oder der Metall- und/oder Halbmetallalkoholate der allgemeinen Formel (IV) mitverwendet werden.

10. Verfahren zur Herstellung von Zinnoxidschichten auf Glas- oder Keramikoberflächen durch Aufbringen einer Formulierung aus Organozinntrihalogeniden und Additive auf die auf 400 - 600 °C erhitzte Oberfläche, **dadurch gekennzeichnet, daß** in den Formulierungen pro 100 Gewichtsteile (Gew.-T.) 0,1 bis 10 Gewichtsteile mindestens einer in den Alkylzinnverbindungen löslichen und mit Wasser reaktiven Verbindung mitverwendet werden.

## Claims

1. Process for stabilizing alkyltin compounds that are liquid at room temperature, especially alkyltin trihalides, **characterized in that** compounds that are soluble in the alkyltin compounds and reactive with water are used in an amount of 0.1 wt. % to 10 wt. % for stabilization.

2. Process according to Claim 1, **characterized in that** the alkyltin compounds used are mono-n-butyltin trichloride.

3. Process according to Claims 1 and 2, **characterized in that** one or more acid halides of general formula (II)
R¹-(-COHal)ₘ (II)
where R¹ is an m-valent branched, aliphatic, cycloaliphatic or aromatic radical of 1-10 carbon atoms with or without double bonds, Hal is a halogen atom and m is 1 or 2, are used as additives.

4. Process according to Claims 1 and 2, **characterized in that** lactams and/or lactones of general formula (III) 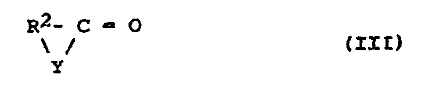 where R² is a 2-valent, optionally branched, aliphatic radical of 3-8 carbon atoms, Y is -O- or -NR³, where R³ is H or an alkyl radical of 1-4 carbon atoms, are used as additives.

5. Process according to Claims 1 and 2, **characterized in that** metal and/or a semimetal alcoholates of general formula (IV)
ER⁴ ₐ(OR⁵)_{b}(OR⁶)_{c} (IV)
where E = Si or Ti, a = 0-3, b = 1-4, c = 0-4 and a+b+c can be 4, R⁴ can be an optionally branched aliphatic radical of 1-8 carbon atoms with or without multiple bonds and R⁵ and R⁶ can be identical or different, optionally branched alkyl radicals of 1-8 carbon atoms or -C(CH₃)=CH-C(O)-CH₃ (radical of acetylacetonate), are used as additives.

6. Process according to Claims 1-5, **characterized in that** at least two additives from the group of the acid halides of general formula (II) and/or lactams and/or lactones of genera formula (III) and/or of the metal and/or semimetal alcoholates of general formula (IV) are used.

7. Glass coating formulation containing alkyltin compounds that are liquid at room temperature and dissolved additives, **characterized in that** the additives used are 0.1 to 10% by weight of water-reactive compounds.

8. Glass coating formulation according to Claim 7, **characterized in that** the alkyltin compound used is mono-n-butyltin trichloride.

9. Glass coating formulation according to Claim 7, **characterized in that** one or more additives from the group of the acid halides of general formula (II) and/or lactams and/or lactones of general formula (III) and/or of the metal and/or semimetal alcoholates of general formula (IV) are used.

10. Process for preparing tin oxide layers on glass or ceramic surfaces by application to the heated surface at 400-600°C of a formulation of organotin trihalides and additives, **characterized in that** the formulations contain 0.1 to 10 parts by weight of at least one compound that is soluble in the alkyltin compounds and reactive with water per 100 parts by weight.

## Revendications

1. Procédé de stabilisation de composés d'alkylétain liquides à la température ambiante, en particulier de trihalogénures d'alkylétain, **caractérisé en ce qu'**on utilise conjointement 0,1 à 10 % en poids de composés solubles dans les composés d'alkylétain et réactifs avec de l'eau.

2. Procédé selon la revendication 1, **caractérisé en ce qu'**on utilise du trichlorure de mono-n-butylétain comme composés d'alkylétain.

3. Procédé selon les revendications 1 et 2, **caractérisé en ce qu'**on utilise comme additifs un ou plusieurs halogénures d'acide de formule générale (II)
R¹-(-COHal)ₘ (II)
dans laquelle R¹ est un radical ramifié aliphatique, cycloaliphatique ou aromatique, de valeur m, contenant le cas échéant des liaisons doubles, présentant 1 à 10 atomes de C, Hal est un atome d'halogène et m est égal à 1 ou 2.

4. Procédé selon les revendications 1 et 2, **caractérisé en ce qu'**on utilise comme additifs des lactames et/ou des lactones de formule générale (III) 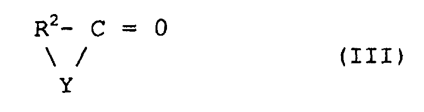 dans laquelle R² est un radical aliphatique, le cas échéant ramifié, divalent, présentant 3-8 atomes de C, Y est -O- ou -NR³ avec R³=H ou un radical alkyle présentant 1-4 atomes de C.

5. Procédé selon les revendications 1 et 2, **caractérisé en ce qu'**on utilise comme additifs des alcoholates de métal et/ou de semi-métal de formule générale (IV)
ER⁴ ₐ(OR⁵)_{b}(OR⁶)_{c} (IV)
dans laquelle E est Si ou Ti, a est égal à 0-3, b égal à 1-4, c égal à 0-4 4 et a+b+c égal à 4 et R⁴ peut être un radical aliphatique, le cas échéant ramifié, contenant le cas échéant des liaisons multiples, présentant 1-8 atomes de C et R⁵, R⁶ peuvent être des radicaux alkyle identiques ou différents, le cas échéant ramifiés, présentant 1-8 atomes de C ou -C(CH₃)=CH-C(O)-CH₃ (radical d'acétonate d'acétyle).

6. Procédé selon les revendications 1-5, **caractérisé en ce qu'**on utilise conjointement au moins deux additifs du groupe des halogénures d'acide de formule générale (II) et/ou des lactames et/ou des lactones de formule générale (III) et/ou des alcoholates de métal et/ou de semi-métal de formule générale (IV).

7. Formulation de revêtement de verre contenant des composés d'alkylétain liquides à la température ambiante et des additifs dissous, **caractérisée en ce qu'**on utilise conjointement comme additifs 0,1-10 pourcent en poids de composés réactifs avec de l'eau.

8. Formulation de revêtement de verre selon la revendication 7, **caractérisée en ce qu'**on utilise conjointement du trichlorure de mono-n-butylétain comme composé d'alkylétain.

9. Formulation de revêtement de verre selon la revendication 7, **caractérisée en ce qu'**on utilise conjointement un ou plusieurs additifs du groupe des halogénures d'acide de formule générale (II) et/ou des lactames et/ou des lactones de formule générale (III) et des alcoholates de métal et/ou de semi-métal de formule IV.

10. Procédé de fabrication de couches d'oxyde d'étain sur des surfaces de verre ou de céramique par application d'une formulation de trihalogénures d'organoétain et d'additifs sur les surfaces chauffées à 400-600°C, **caractérisé en ce qu'**on utilise conjointement 0,1 à 10 parties en poids par 100 parties en poids d'au moins un composé soluble dans les composés alkylétain et réactif avec de l'eau.
